# EUROPEAN PATENT APPLICATION

(11) **EP 1 727 026 A2**
(43) Date of publication of application: **29.11.2006**
(21) Application number: 06009986.8
(22) Date of filing: 15.05.2006
(51) Int. Cl.: G06F 3/023

(54) **Character entry system and method for electronic devices**

(30) Priority: 25.05.2005 US 136940
(71) Applicant: Avago Technologies General IP (Singapore) Pte. Ltd, Singapore 768923 (SG)
(72) Inventor: Wenstrand, John Stewart, Menlo Park CA 94025 (US); Harley, Jonah A., Mountain View CA 94949 (US); Schroeder, Dale W., Scotts Valley CA 95066 (US); Panotopoulos, Georgios, Palo Alto CA 94306 (US)
(74) Representative: Schoppe, Fritz

(57) **Abstract**

A text entry system enables efficient entry of characters on an electronic device (110). The electronic device (110) includes a display (100) for displaying characters, an input device (20) moveable between selectable positions and a processor (400) operable to map a first one of the selectable positions and a second one of the selectable positions to an entered character.

## Description

### BACKGROUND OF THE INVENTION

Manufacturers of hand-held and/or portable electronic devices, such as laptop computers, personal digital assistants (PDA), wireline or wireless telephones, video games and other similar electronic devices, continually strive to add new features and applications to their products. Many of these new features and applications require, or can be enhanced by, the ability to enter text directly into the device, instead of downloading the text from another device, such as a computer or server. For example, the majority of wireless telephones on the market today offer a text messaging application and a phone book feature, both of which require text entry directly into the device.

The prevailing text entry method in wireless telephones is the existing twelve-key numeric pad, which is used to input 10 decimal digits, 26-33 characters of the alphabet, depending on the language and other alphanumeric characters, symbols or text entry functions (hereinafter, collectively referred to as "characters"). Multiple characters are assigned to each key, and selection of a particular character requires the user to potentially press a key multiple times at a certain pace.

Another text entry method available in some electronic devices is a software-defined keyboard ("soft keyboard") displayed on the electronic device display. Soft keyboards can be either pen-based, in which the user employs a stylus to tap and select a key, or cursor-based, in which the user moves a cursor to a desired key using a navigation (or cursor control) device on the electronic device and selects the key by pressing a "Select" button, an "Enter" button or another similar selection mechanism. Other text entry methods commonly found in personal digital assistants (PDAs) include miniature QWERTY keyboards and Graffitti, in which a stylus is used to write characters.

However, each of the available text entry methods is slow and/or has a fairly long learning curve. Thus, none of the traditional text entry solutions provide for rapid text entry with a minimal learning curve. In addition, further miniaturization of electronic devices may eventually eliminate the QWERTY and numeric keypad text entry methods.

### SUMMARY OF THE INVENTION

Embodiments of the present invention provide an electronic device for enabling efficient entry of characters. The electronic device includes a display for displaying characters, an input device moveable between selectable positions and a processor operable to map a first one of the selectable positions and a second one of the selectable positions to an entered character.

In one embodiment, the first selectable position maps to a first subset of the characters and the second selectable position maps to a second subset of the characters. The entered character is a character common to both the first subset of the characters and the second subset of the characters. For example, in an exemplary embodiment, the characters are organized as a table including rows and columns. The first selectable position maps to one of the rows and the second selectable position maps to one of the columns. The entered character is that located at the intersection between that row and column.

In a further embodiment, the input device includes two input devices. The first input device is positioned in the first position and the second input device is positioned in the second position. In an exemplary embodiment, the first and second input devices are rocker switches.

In another exemplary embodiment, the first and second input devices are puck-type pointing devices, each including a respective surface having a respective puck field of motion defined thereon and a respective moveable puck operable to move within the respective puck field of motion. The position of the puck within the puck field of motion of the first input device is the first position and the position of the puck within the puck field of motion of the second input device is the second position. In a further embodiment, the surfaces of the puck-type pointing devices each include respective detent features defined within the respective puck fields of motion for mechanically engaging with the respective moveable pucks. The respective detent features correspond to the respective selectable positions of the puck-type pointing devices.

Other embodiments of the present invention provide a method for entering text on an electronic device using an input device moveable between selectable positions. The method includes receiving a first signal from the input device indicating a first one of the selectable positions, receiving a second signal from the input device indicating a second one of the selectable positions and mapping the first and second selectable positions to an entered character.

### BRIEF DESCRIPTION OF THE DRAWINGS

The disclosed invention will be described with reference to the accompanying drawings, which show important sample embodiments of the invention and which are incorporated in the specification hereof by reference, wherein:
FIG. 1 is a pictorial representation of an exemplary electronic device including an input device for entering characters into the electronic device, in accordance with embodiments of the present invention;
FIG. 2A is a top view of an exemplary rocker switch input device for entering text into the electronic device, in accordance with embodiments of the present invention;
FIG. 2B is a simplified side view of the input device of FIG. 2A, in accordance with embodiments of the present invention;
FIG. 3A is a top view of an exemplary puck-type input device for entering text into the electronic device, in accordance with embodiments of the present invention;
FIG. 3B is a cross-sectional view of the input device of FIG. 3A, in accordance with embodiments of the present invention;
FIG. 3C is a top view of an exemplary puck-type input device including detents corresponding to selectable positions of the input device, in accordance with embodiments of the present invention;
FIG. 4 is a block diagram of an exemplary electronic device capable of mapping the positions of the input devices to characters, in accordance with embodiments of the present invention;
FIG. 5 is a pictorial representation of exemplary subsets of the character set for mapping to input device positions, in accordance with embodiments of the present invention;
FIG. 6 is a pictorial representation of other exemplary subsets of the character set for mapping to input device positions, in accordance with embodiments of the present invention;
FIG. 7 is a flow chart illustrating an exemplary process for entering text on an electronic device, in accordance with embodiments of the present invention; and
FIG. 8 is a flow chart illustrating an exemplary process for entering text on an electronic device using a dual-input device, in accordance with embodiments of the present invention.

### DETAILED DESCRIPTION OF THE EXEMPLARY EMBODIMENTS

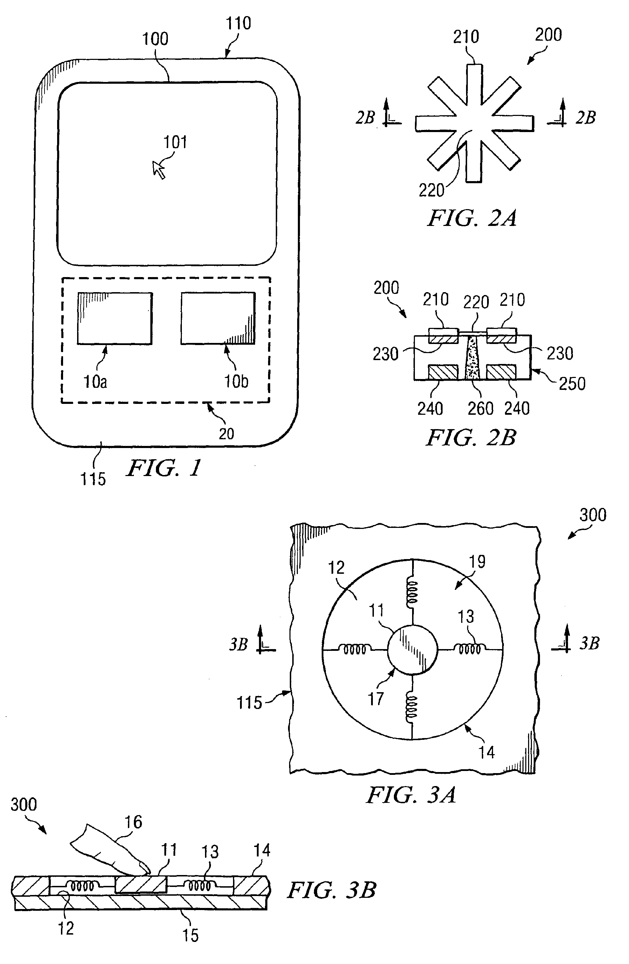

FIG. 1 is a pictorial representation of an electronic device 110 implementing an exemplary input device 20 for entering characters into the electronic device 110, in accordance with embodiments of the present invention. "Characters" as used herein include, for example, numbers, letters, punctuation marks, and other alphanumeric characters, symbols and simple text entry functions such as space and delete. The range of characters that can be entered by input device 20 will be referred to as a character set. Different languages may involve the use of different character sets. The example of electronic device 110 shown in FIG. 1 is a personal digital assistant (PDA). However, it should be understood that the present invention is applicable to any type of electronic device 110, such as laptop computers, wireless (cellular) telephones, notebooks, hand-held video game devices, remote controls, portable music players or other similar electronic devices.

The input device 20 in FIG. 1 is shown located on a top surface 115 of the electronic device 110. However, in other embodiments, the input device 20 can be located on a side surface or bottom surface of the electronic device 110, or for other types of electronic devices, can be located on a different device in communication with the electronic device 110. For example, the input device 20 can be located on a mouse-type device, a remote control, a keyboard or other similar device. The input device 20 is operable to both enter characters and control the position of a cursor 101 on a display 100 of the electronic device 110.

The input device 20 shown in FIG. 1 is a dual-input device 20 that includes two individual input devices 10a and 10b. Each input device 10a and 10b is further moveable between known selectable positions. Each combination of the selectable positions of each input device 10a and 10b maps to a particular character. The user selects (or enters) a particular character by placing the first input device 10a in one of its selectable positions and placing the second input device 10b in one of its selectable positions. In one embodiment, the selection of a particular character is determined by the order that the user places the first input device 10a and the second input device 10b in their respective selectable positions. In another embodiment, the selection of a particular character is independent of the placement order between the first input device 10a and the second input device 10b. Thus, both input devices 10a and 10b can be placed in their selectable positions simultaneously or either input device 10a or 10b can be placed first in its selectable position to select the particular character.

For example, in one embodiment, each selectable position of a first input device (e.g., input device 10a) maps to a subset of the character set, and each selectable position of a second input device (e.g., input device 10b) maps to another subset of the character set. The entered character is a character common to both the first subset of the character set and the second subset of the character set. As an example, when a user places the first input device 10a into a selectable position, a first subset of the character set is accessed, and then when the user places the second input device 10b into a selectable position, a particular character within the first subset of the character set accessed by the first input device 10a is selected as the entered character. Thus, the entered character is the character associated with the selectable position of the second input device 10b within the subset of the character set associated with the position of the first input device 10a. Likewise, the user can place the second input device 10b into the selectable position prior to or simultaneously with placing the first input device 10a into the selectable position to select the same entered character.

In another embodiment, the characters in the character set are organized as a table having rows and columns. Each selectable position of the first input device 10a maps to a row of the characters, and each selectable position of the second input device maps to a column of the characters. The entered character is that located at the intersection between the selected row and the selected column. In a further embodiment, each selectable position of the first input device 10a generates a respective address (e.g., a 3 bit address), and each selectable position of the second input device 10b generates another respective address (e.g., a 3 bit address). The two 3-bit addresses generated by the input devices 10a and 10b are concatenated to produce a 6-bit address for character lookup. The entered character is the character associated with the concatenated 6-bit address.

In other embodiments, the input device 20 includes only a single input device (e.g., input device 10a). Each selectable position of the input device 10a maps to two different subsets of the character set. The user selects (or enters) a particular character by placing the input device 10a in one of the selectable positions to access a particular subset of the character set and then subsequently placing the input device 10a in one of the selectable positions to select one of the characters within the accessed subset of the character set. Thus, in this embodiment, selection of a particular character requires the user to press the same input device 10a twice.

The subsets of the character set addressable by each input device 10a and 10b are displayed on the display 100 of the electronic device 110 to facilitate rapid text entry with a minimal user learning curve. For example, the characters can be displayed in subsets on the display 100 (e.g., subset 1 includes the characters A-H, subset 2 includes the characters a-h, etc.). The subsets can be located on the display 100 in positions corresponding to the selectable positions of the first input device 10a. Thus, the subset of the character set accessed by placing the first input device 10a in an "up" position can be located at the top of the display 100, while the subset of the character set accessed by placing the first input device 10a in a "down" position can be located at the bottom of the display 100.

Once the user selects one of the subsets by placing the first input device 10a into one of the selectable positions, the selected subset of the character set can be displayed on the display 100 by itself, or with the other subsets of the character set. The characters in the selected subset can be located on the display 100 in positions corresponding to the selectable positions of the second input device 10b. Thus, the character accessed by placing the second input device 10b in an "up" position can be located at the top of the display 100 (or the top of the selected subset displayed on the display 100), while the character accessed by placing the second input device 10b in a "down" position can be located at the bottom of the display 100 (or the bottom of the selected subset displayed on the display 100).

As another example, the characters can be displayed on the display 100 in numbered rows and columns. Each row number corresponds to a particular selectable position of the first input device 10a, and each column number corresponds to a particular selectable position of the second input device 10b. Other character display options that facilitate rapid text entry are also envisaged as embodiments of the present invention. In addition, in other embodiments, only the entered characters selected by placing the first input device 10a in one of its selectable positions and the second input device 10b in one of its selectable positions are displayed on the display. In this embodiment, the user has prior knowledge of the mapping between the input device position and the character.

Each input device 10a and 10b is any type of analog or digital input device. In one embodiment, the input devices 10a and 10b include joysticks, j-keys, touchpads, trackballs or other similar analog and digital input devices. For example, as shown in FIGs. 2A and 2B, an exemplary input device 10a or 10b for entering text on an electronic device is a rocker switch 200. The rocker switch 200 shown in FIGs. 2A and 2B can be implemented as one or both of the input devices 10a or 10b in the dual-input device 20 of FIG. 1. FIG. 2A is a schematic top view of the rocker switch 200 and FIG. 2B is a simplified side view of the rocker switch 200. The rocker switch 200 includes multiple buttons 210 arranged as a directional pad 220. Each button 210 corresponds to one of the selectable positions. As can be seen in FIG. 2B, each button 210 is suspended over a substrate 250 and the directional pad 220 formed of the buttons 210 is supported by a central pivot 260 to enable "rocking" of the rocker switch 200 between selectable positions corresponding to the buttons 210. A metal contact 230 beneath each button 210 completes a circuit when pressed into contact with a corresponding metal contact 240 on the substrate 250.

Thus, with a rocker switch 200, the user selects a particular character or subset of the character set by moving ("rocking") the directional pad 220 toward one of the selectable positions corresponding to a button 210 to thereby press one of the buttons 210. The number of buttons 210 (selectable positions) is dependent on the type of rocker switch 200. For example, the rocker switch 200 can be a 4-way rocker switch (e.g., up, down, left and right), a 5-way rocker switch (e.g., up, down, left, right and center), an 8-way rocker switch (e.g., up, down, left, right, right diagonal up, right diagonal down, left diagonal up and left diagonal down), as shown in FIGs. 2A and 2B, or a 9-way rocker-switch (e.g., up, down, left, right, right diagonal up, right diagonal down, left diagonal up, left diagonal down and center).

In other embodiments, each input device 10a and 10b is an omni-directional analog input device, such as a puck-type pointing device, as shown in FIG. 1. Puck-type pointing devices are compact puck-shaped devices that are manipulated by a user's finger to move within a puck field of motion. The position of the puck in the puck field of motion is sensed using a variety of electrical, electromagnetic and optical techniques, and the position of the puck is mapped to a cursor position on a display or an entered character.

Examples of puck-type pointing devices are described in U.S. Patent No. 6,084,570 to Milroy, entitled "Compact Cursor Controller Structure For Use With Laptop, Notebook and Hand-Held Computers and Keyboards," U.S. Patent No. 5,771,037 to Jackson, entitled "Computer Display Cursor Controller," U.S. Patent No. 6,278,440 to Katsurahira et al., entitled "Coordinate Input Apparatus and Position-Pointing Device," and U.S. Patent Application Serial No. 10/723,957 of Harley et al., entitled "Compact Pointing Device."

Referring now to FIGs. 3A and 3B, features of an exemplary puck-type pointing device 300 are illustrated for use as one or both of the input devices 10a or 10b in the dual-input device 20 of FIG. 1. FIG. 3A is a schematic top view of the puck-type pointing device 300 and FIG. 3B is a cross-sectional view of the puck-type pointing device 300. The puck-type pointing device 300 includes a puck 11 moveable over a surface 12 of a substrate 15 within a puck field of motion 19 in response to a lateral force (i.e., a force applied in a direction generally parallel to the top surface 115 of the electronic device) applied to the puck 11. The lateral force is typically applied to the puck 11 by a user's finger 16, thumb or multiple fingers.

Each puck-type pointing device 300 further includes springs 13 that connect the puck 11 to the top surface 115 of the electronic device 110. The springs 13 operate to return the puck 11 to a center position 17 upon release of the lateral force on the puck 11. For example, when the user releases the puck 11 by removing the user's finger 16, the puck 11 is returned to the center position 17 by the springs 13 that connect the puck 11 to a perimeter 14 of the puck field of motion 19. The perimeter 14 of the puck field of motion 19 is typically connected to the top surface 115 of the electronic device on which the pointing device 10 is located.

In one embodiment, the puck 11 includes a pressure sensor (not shown) that measures the pressure (i.e., a force applied in a direction generally orthogonal to the surface 115) applied to the puck 11 by the user, and the puck-type pointing device 10 includes a motion sensor (not shown) that determines the displacement of the puck 11 relative to the surface 12 in response to the lateral force applied to the puck 11 by the user. In one embodiment, the pressure sensor in the puck 11 is operable to sense two predetermined pressure levels. A first pressure level activates the motion sensor. A second pressure level provides a "click" function associated with a conventional mouse. In other embodiments, a tactile feedback mechanism can also be included in the puck 11 to provide to the user tactile feedback that indicates that the user has applied pressure at or above the second pressure level to activate the "click" function.

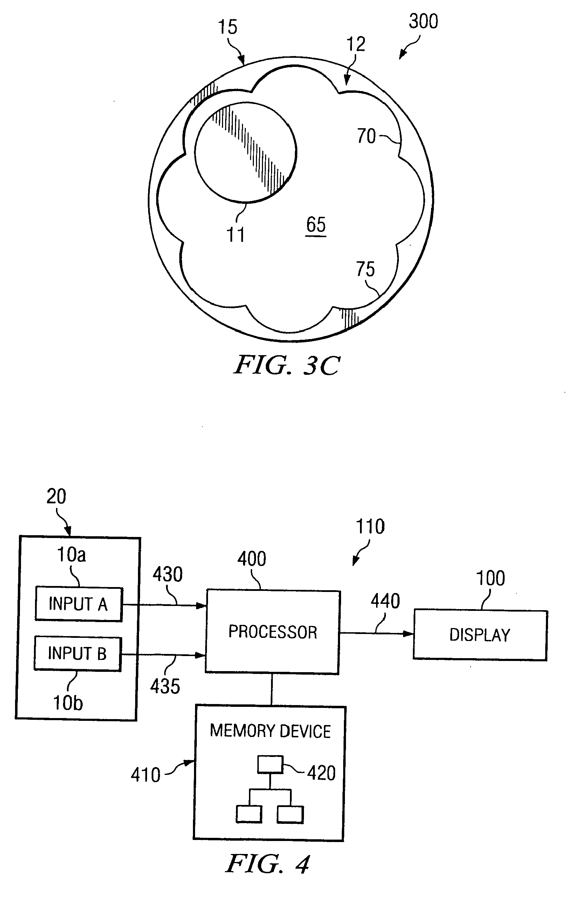

FIG. 3C is a top view of an exemplary puck-type pointing device 300 including detent features on the substrate 15 corresponding to selectable positions of the puck-type pointing device for text entry, in accordance with embodiments of the present invention. The surface 12 of the substrate 15 includes an indentation 65 having an edge 70 including at least one scalloped region 75 shaped to receive at least a portion of the moveable puck 11. Each scalloped region 75 maps to a subset of a character set. Positioning the moveable puck 11 to engage with one of the scalloped regions 75 enables the user to select one of the subsets of the character set. For example, in one embodiment, the user selects one of the subsets of the character set by positioning the puck within one of the scalloped regions 75 and "clicking" on the puck 11. In another embodiment, the user selects one of the subsets of the character set by simply moving the puck 11 in a direction generally towards one of the scalloped regions 75.

In FIG. 3C, eight scalloped regions 75 are shown to provide eight distinct locations that can easily be found by feel. However, the number of scalloped regions 75 and distinct selectable positions of the puck 11 depends on the application, type of electronic device and other similar factors. For example, in other embodiments, the center position of the puck 11 (i.e., center position 17 shown in FIG. 3A) is a selectable position that maps to a different subset of the character set by "clicking" when the puck 11 is positioned at the center position. In further embodiments, the selectable positions include both moving selectable positions and "click-and-move" selectable positions. For example, moving the puck 11 towards one of the scalloped regions 75 maps to a first subset of the character set, whereas clicking the puck 11 while moving the puck 11 towards the same scalloped region 75 maps to a second subset of the character set.

In addition, other types of detents are also capable of providing selectable positions for text entry. For example, mechanical detents can be formed of indentations in the surface 12 of the substrate 15 and protruding elements (e.g., fixed protrusions) protruding from a bottom surface of the puck. When the puck 11 is positioned over one of the indentations or subsets of indentations, the fixed protrusion(s) on the puck mate with corresponding indentation(s) on the substrate 15 corresponding to a particular subset of the character set to enable selection of the subset by the user. Other examples of mechanical detents are described in U.S. Patent Application Serial No. 11/049,065 of Harley et al. entitled "A Pointing Device Including a Moveable Puck with Mechanical Detents."

Referring now to FIG. 4, there is illustrated various components of an exemplary electronic device 110 capable of mapping selectable positions of an input device 20 to respective subsets of the character set for text entry, in accordance with embodiments of the present invention. The electronic device 110 includes a processor 400 connected to a memory device 410. The processor 400 in combination with the memory device 410 controls the operation of the electronic device 110. The processor 400 can be a microprocessor, microcontroller, programmable logic device or any other processing device. The memory device 410 can be any type of memory device for use on any type of portable and/or hand-held electronic device 110. For example, the memory device 410 can be a flash ROM, EEPROM, ROM, RAM or any other type of storage device.

In one embodiment, the memory device 410 stores software 420 executable by the processor 400 to map the position of the input device 20 to a particular subset of the character set. For example, the software 420 can include a text entry algorithm for determining the entered (selected) character from the position of the input device 20. In another embodiment, the text entry algorithm is stored in the processor 400, and the memory device 410 stores data used by the processor 400 during the text entry process.

The electronic device 110 further includes the display 100 and the dual-input device 20 containing input devices 10a and 10b. The processor 400 is connected to receive a first position indicating signal 430 from input device 10a in response to a force applied to input device 10a by a user. The first position indicating signal 430 is used by the processor 400 to determine the position of input device 10a. The processor 400 is further connected to receive a second position indicating signal 435 from input device 10b in response to a force applied to input device 10b by a user. The second position indicating signal 435 is used by the processor 400 to determine the position of input device 10b.

The processor 400 translates the position indicating signal 430 into a first input device position and identifies a first subset of the character set addressed by the first input device position. The processor further translates the position indicating signal 435 into a second input device position and determines a second subset of the character set addressed by the second input device position. The processor 400 identifies the entered character (character desired by the user) as the character common to the first subset of the character set and the second subset of the character set, and outputs the entered character to the display 100 for display thereon. In further embodiments, the processor 400 provides the subsets of the character set addressable by each input device 10a and 10b to the display 100 for display thereon.

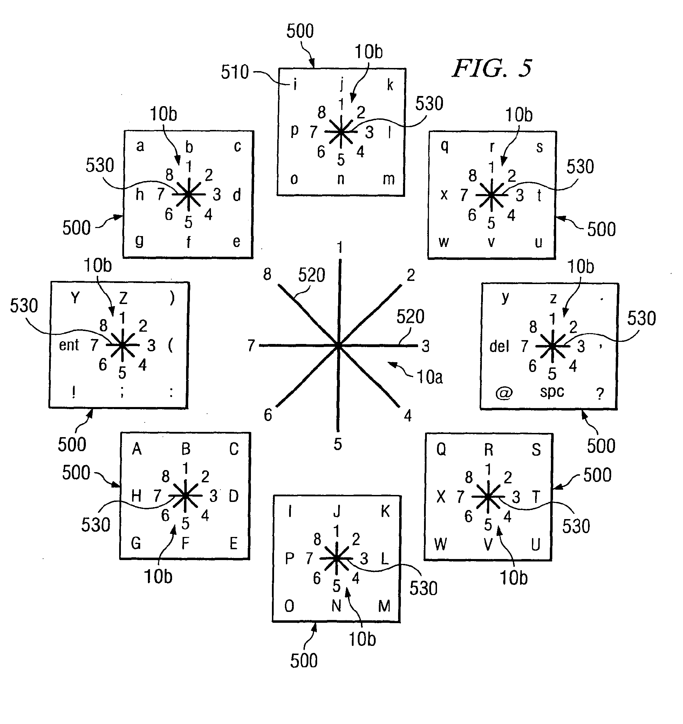

FIG. 5 is a pictorial representation of the subsets of an exemplary character set 510 for mapping to input device positions, in accordance with embodiments of the present invention. In FIG. 5, the character set 510 is arranged in subsets 500 that are selectable using the first input device 10a. The first input device 10a is shown moveable between eight selectable positions 520 (labeled clockwise 1-8). Each selectable position 520 maps to one of the subsets 500 of characters 510. For example, in FIG. 5, the position 520 labeled "1" maps to the subset 500 of the character set 510 including the letters "i" - "p", the position 520 labeled "2" maps to the subset 500 of the character set 510 including the letters "q" - "x", the position 520 labeled "3" maps to the subset 500 of the character set 510 including the letters "y" and "z", the punctuation marks ".", ",", "?", the alphanumeric character "@" and the text entry functions "spc" and "del", the position 520 labeled "4" maps to the subset 500 of the character set 510 including the letters "Q" - "X", the position 520 labeled "5" maps to the subset 500 of the character set 510 including the letters "I" - "P", the position 520 labeled "6" maps to the subset 500 of the character set 510 including the letters "A" - "H", the position 520 labeled "7" maps to the subset 500 of the character set 510 including the letters "Y" and "Z", the punctuation marks ")", "(", ":", ";", "!" and the text entry function "ent" and the position 520 labeled "8" maps to the subset 500 of the character set 510 including the letters "a" - "h".

The subsets 500 of characters 510 mapping to selectable positions 520 of the first input device 10a can be displayed on a display of the electronic device arranged as they are shown in FIG. 5 or in another arrangement. In addition, the characters in the selected subset 500 can be displayed on the display 100 alone, or with the other subsets 500 of characters 510, the latter being shown in FIG. 5.

Once the user selects one of the subsets 500 by placing the first input device 10a into one of the eight selectable positions 520, the user can select one of the characters in the selected subset 500 using the second input device 10b. The second input device 10b is also shown moveable between eight selectable positions 530 (labeled clockwise 1-8). Each selectable position 530 of the second input device 10b maps to another subset of the characters in the character set 510 that includes one character from each of the subsets 500. The subsets of the character set 510 to which the selectable positions of the second input device 10b are mapped are not specifically labeled in FIG. 5 to simplify the drawing. For example, in FIG. 5, the selectable position 530 labeled "1" of the second input device 10b maps to the subset including the letters "j," "r," "z," "R," "J," "B," "Z" and "b," with each character in the subset corresponding to the "up" position 530 of the second input device 10b.

Therefore, in another embodiment, the user places the second input device 10b into one of the selectable positions 530 first (i.e., prior to placing the first input device 10a into one of the selectable positions 520), and the displayed subset of the character set includes the characters corresponding to selectable positions 520 of the first input device 10a. Thus, the displayed subsets of the character set correspond to either the selectable positions 520 of the first input device 10a or the selectable positions 530 of the second input device 10b depending on which input device 10a or 10b the user moves first. In a further embodiment, the displayed subsets of the character set is selectable by the user (e.g., a left-handed user can select for display the subsets of the character set corresponding to the selectable positions 530 of the second input device 10b).

Using the example shown in FIG. 5, to enter the character 510 "V", the user places the first input device 10a into the right diagonal down selectable position labeled "4" to select the subset 500 including the character 510 "V", and places the second input device 10b into the down selectable position labeled "5" to select the character 510 "V". As another example, to enter the character "a", the user places the first input device 10a into the left diagonal up selectable position labeled "8" to select the subset 500 including the character 510 "a", and places the second input device 10b into the left diagonal up selectable position labeled "8" to select the character 510 "a". In one embodiment, the selections of the subset 500 and the character 510 are made using different input devices 10a and 10b. In other embodiments, the selections of the subset 500 and the character 510 are made sequentially using the same input device (e.g., input device 10a or 10b).

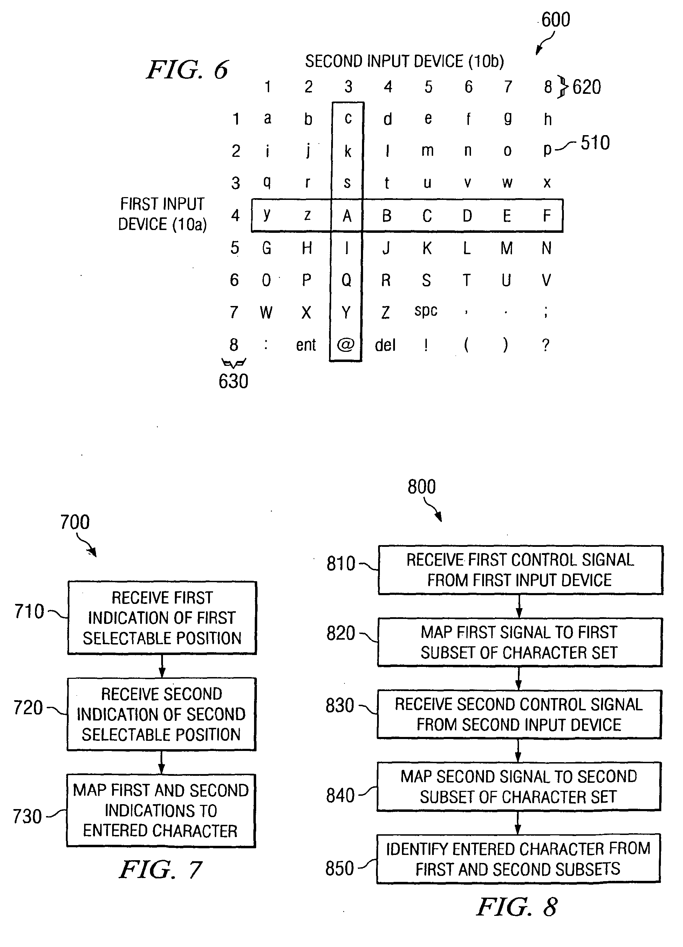

FIG. 6 is a pictorial representation of other exemplary subsets of the character set for mapping to input device positions, in accordance with embodiments of the present invention. In FIG. 6, the characters constituting the character set 510 are arranged in a table 600 having rows 620 and columns 630. Each selectable position of the first input device 10a maps to a row 620 of the characters, and each selectable position of the second input device 10b maps to a column 630 of the characters. The rows 620 and columns 630 in FIG. 6 are numbered corresponding to the selectable positions of the input devices 10a and 10b. In one embodiment, the selectable positions of the input devices 10a and 10b correspond to the respective eight selectable positions 520 and 530 shown in FIG. 5. To select a particular character 510, the user places the first input device 10a into the selectable position that maps to the row 620 including the particular character that the user desires to enter, and the user places the second input device 10b into the selectable position that maps to the column 630 that includes the particular character that the user desires to enter. The character selected for entry is the character at the intersection of the selected row 620 and column 630. For example, to enter the character 510 "A", the user places the first input device 10a into the selectable position labeled "4" that maps to the row 620 including the character "A", and the user places the second input device 10b into the selectable position labeled "3" that maps to the column 630 including the character "A".

FIG. 7 is a flow chart illustrating an exemplary process 700 for entering text on an electronic device using an input device moveable between selectable positions, in accordance with embodiments of the present invention. Initially, at block 710, a first indication of a first one of the selectable positions of the input device is received. At block 720, a second indication of a second one of the selectable positions of the input device is received. At block 730, the combination of the first and second indications is mapped to an entered character (character selected by the user).

FIG. 8 is a flow chart illustrating an exemplary process 800 for entering text on an electronic device using a dual-input device, in accordance with embodiments of the present invention. Initially, at block 810, a first position indicating signal is received from a first input device in response to a lateral force applied to the first input device by a user. At block 820, the first position indicating signal is translated into a first input device position that maps to a first subset of the character set. At block 830, a second position indicating signal is received from a second input device in response to a lateral force applied to the second input device by a user. At block 840, the second position indicating signal is translated into a second input device position that maps to a second subset of the character set. At block 850, the entered character (character selected by the user) is identified from the first subset of the character set and the second subset of the character set.

The innovative concepts described in the present application can be modified and varied over a wide rage of applications. Accordingly, the scope of patents subject matter should not be limited to any of the specific exemplary teachings discussed, but is instead defined by the following claims.

## Claims

1. An electronic device (110), comprising:
a display (100) for displaying characters;
an input device (20) moveable between selectable positions; and
a processor (400) operable to map a combination of a first one of said selectable positions of said input device (20) and a second one of said selectable positions of said input device (20) to an entered character.

2. The electronic device (110) of Claim 1, wherein said input device (20) comprises a first input device (10a) moveable to said first one of said positions and a second input device (10b) moveable to said second one of said positions.

3. The electronic device (110) of Claim 2, wherein said first input device (10a) includes a first puck-type pointing device (300) including a first surface (12) having a first puck field of motion (19) defined thereon and a first moveable puck (11) operable to move within said first puck field of motion (19), and wherein a position of said first moveable puck (11) within said first puck field of motion (19) is said first one of said positions, and wherein said second input device (10b) includes a second puck-type pointing device (300) including a second surface (12) having a second puck field of motion (19) defined thereon and a second moveable puck (11) operable to move within said second puck field of motion (19), and wherein a position of said second moveable puck (11) within said second puck field of motion (19) is said second one of said positions.

4. The electronic device (110) of Claim 3, wherein said first surface (12) and said second surface (12) each include respective detent features defined within said puck field of motion (19) for mechanically engaging with said respective first and second moveable pucks (11), said respective detent features corresponding to said selectable positions.

5. The electronic device of Claim 2, wherein at least one of said first input device (10a) and said second input device (10b) comprises a rocker switch (200).

6. The electronic device (110) of Claim 1, wherein:
said characters belong to a character set (510);
said electronic device (110) additionally comprises a memory (410) for storing said character set (510) arranged in subsets (500) of said character set; and
said processor (400) is further operable to map said first selectable position (520) to one of said subsets (500) of said character set (510) and to map said second selectable position (530) to a particular character within said one of said subsets (500) of said character set (510).

7. The electronic device (110) of Claim 1, wherein:
said characters belong to a character set (510);
said electronic device (110) additionally comprises a memory (410) for storing said character set (510) as a table (600) including rows (620) and columns (630); and
said processor (400) is further operable to map said first selectable position (520) to one of said rows (620) and to map said second selectable position (530) to one of said columns (630), and wherein said entered character is an intersecting character between said one of said rows (620) and said one of said columns (630).

8. A method for entering characters including characters into electronic device (110) using an input device (20) moveable between selectable positions, said method comprising:
receiving (710) a first indication (430) of a first one of said selectable positions of said input device (20);
receiving (720) a second indication (435) of a second one of said selectable positions of said input device (20); and
mapping (730) a combination of said first indication (430) and said second indication (435) to an entered character.

9. The method of Claim 8, wherein:
said characters belong to a character set (510); and
said method additionally comprises:
mapping (820) said first indication (430) to a first subset (500) of said character set (510);
mapping (840) said second indication (435) to a second subset (500) of said character set (510); and
identifying (850) an entered character from said first subset (500) of said character set (510) and said second subset (500) of said character set (510).

10. The method of Claim 8, wherein said input device (20) includes a first input device (10a) for providing (810) said first indication (430) and a second input device (10b) for providing (830) said second indication (435).
